# EUROPÄISCHE PATENTANMELDUNG

(11) **EP 1 672 353 A1**
(43) Veröffentlichungstag der Anmeldung: **21.06.2006**
(21) Anmeldenummer: 04106640.8
(22) Anmeldetag: 16.12.2004
(51) Int. Cl.: G01N 21/64, G01N 21/78, G01N 21/21

(54) **Verfahren zur Zustandserfassung eines biologischen Systems mit einem Lumineszenzsensor**

(71) Anmelder: Evotec Technologies GmbH, 40225 Düsseldorf (DE)
(72) Erfinder: Kottig, Karsten Dr., 22589 Hamburg (DE)
(74) Vertreter: Meyers, Hans-Wilhelm

(57) **Zusammenfassung**

Verfahren zur Erfassung des Zustandes eines vorzugsweise biologischen Systems, vorzugsweise in Abhängigkeit von einem Stimulus, wobei das System insbesondere ausgewählt ist aus der Gruppe bestehend aus Zellen, Zellorganellen, künstlichen Membranen, natürlichen Membranen und Vesikeln, mit einem in dem System befindlichen Lumineszenzsensor, dessen Spektral- und/oder Polarisationseigenschaften vom Zustand des Systems abhängig sind, wobei die Spektral- und/oder Polarisationseigenschaften des Lumineszenzsensors erfasst werden, mittels einer molekularen Fluktuationsanalyse ausgewertet und hierüber Rückschlüsse auf den Zustand des Systems gezogen werden.
Der Lumineszenzsensor ist vorzugsweise ein spannungssensitiver oder ionenkonzentrationssensitiver Fluoreszenzsensor womit Rückschlüsse auf das Membranpotential und/oder auf die Ionentransportsysteme einer Zelle gezogen werden können.
Das Verfahren ist geeignet zur Anwendung in Screeningverfahren nach pharmazeutischen Wirkstoffen, in der Diagnostik sowie zur Bestimmung von Viren oder Virenfragmenten.

## Beschreibung

Gegenstand der vorliegenden Erfindung ist ein Verfahren zur Erfassung eines Zustandes eines Systems mit einem in dem System befindlichen Lumineszenzsensor sowie Anwendungen dieses Verfahrens.

Der Einsatz umgebungssensitiver Lumineszenz Farbstoffe zur Bestimmung von Eigenschaften ist bekannt [Röcker 1996]. Ausleseparameter ist der Fluoreszenzspektrenshift, der durch Veränderungen der Umgebung verursacht wird und durch einen Kantenfilter (Helligkeitsänderung durch spektrale Unterdrückung) oder durch einen Monochromator spektral über Photodiodenarrays [Meyer 1997] oder CCD Kameras [Kuhn 2003] gemessen werden kann. Spezielle Fluoreszenzfarbstoffe werden hierbei eingesetzt um aktive Signalausbreitung - z.B. die Ausbreitung von Aktionspotentialen in Neuronen - innerhalb von Zellen zu detektieren und hierüber Eigenschaften - z.B. die lonenkanaldichte oder die Art der lonenkanäle - von zellulären System messtechnisch erfassen zu können. Die eingesetzten Methoden lassen aber Rückschlüsse auf die Farbstoffmenge nur über eine Messung der Gesamtintensität des vorhandenen Farbstoffs zu, so daß eine Messung gegen eine zweite Messung an der gleichen Meßposition mit geänderten Systemzustand referenziert werden muß. Dies hat zur Konsequenz, daß das System in der Meßkonstellation zumindest zweimal vermessen werden muß was zur Änderung des Zustand des Systems sich geändert hat.

Ein der Erfindung zu Grunde liegendes technisches Problem ist die Bereitstellung eines Verfahrens, das die Bestimmung der Konzentration eines Lumineszenzsensors in einem Bereich eines Systems, dessen Zustand erfasst werden soll, erlaubt. Ein weiteres technisches Problem besteht darin, das Verfahren so auszugestalten, dass sich die Konzentration des Lumineszenzsensors aus nur einer Messung der Lumineszenz ergeben soll.

Gelöst wird das angesprochene Problem durch ein Verfahren zur Erfassung des Zustandes eines vorzugsweise biologischen Systems, vorzugsweise in Abhängigkeit von einem Stimulus, wobei das System insbesondere ausgewählt ist aus der Gruppe bestehend aus Zellen, Zellorganellen, künstlichen Membranen, natürlichen Membranen und Vesikeln, mit einem in dem System befindlichen Lumineszenzsensor, dessen Spektrat- und/oder Fblarisationseigenschaften vom Zustand des Systems abhängig sind, wobei die Spektral- und/oder Polarisationseigenschaften des Lumuieszenzsensors erfasst werden, mittels einer molekularen Fluktuationsanalyse ausgewertet und hierüber Rückschlüsse auf den Zustand des Systems gezogen werden.

Das erfindungsgemäße Verfahren eignet sich mithin auch zur Erfassung von Änderungen eines Systems, in dem zunächst der Zustand des Systems vor einer Änderung erfasst wird unter Anwendung des erfindungsgemäßen Verfahrens, dann eine Zustandsänderung durchgeführt wird und der sich ändernde Zustand des Systems oder der geänderte Zustand des Systems erneut unter Anwendung des erfindungsgemäßen Verfahrens erfasst wird.

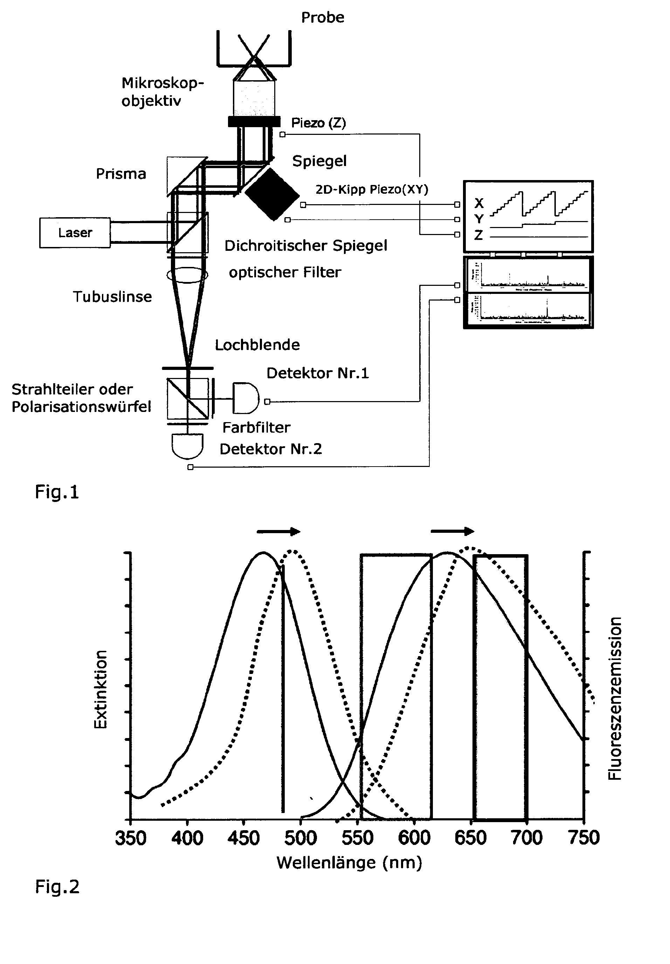

- Fig.1: zeigt schematisch eine Messanordnung zur Verwendung im erfindungsgemäßen Verfahren.
- Fig.2: zeigt schematisch eine Absorptions- und Emmissionsspektrum eines Fluoreszenz-Farbstoffes für die im erfindungsgemäßen Verfahren. Bei spektraler Verschiebung aufgrund äußerer Änderungen (z.B. Potentialänderung) verändert sich das Spektrum (z.B. aufgrund des Starkeffekts) und damit die Meßgröße des kanalabhängigen Fluoreszenzfluktuationssignals.

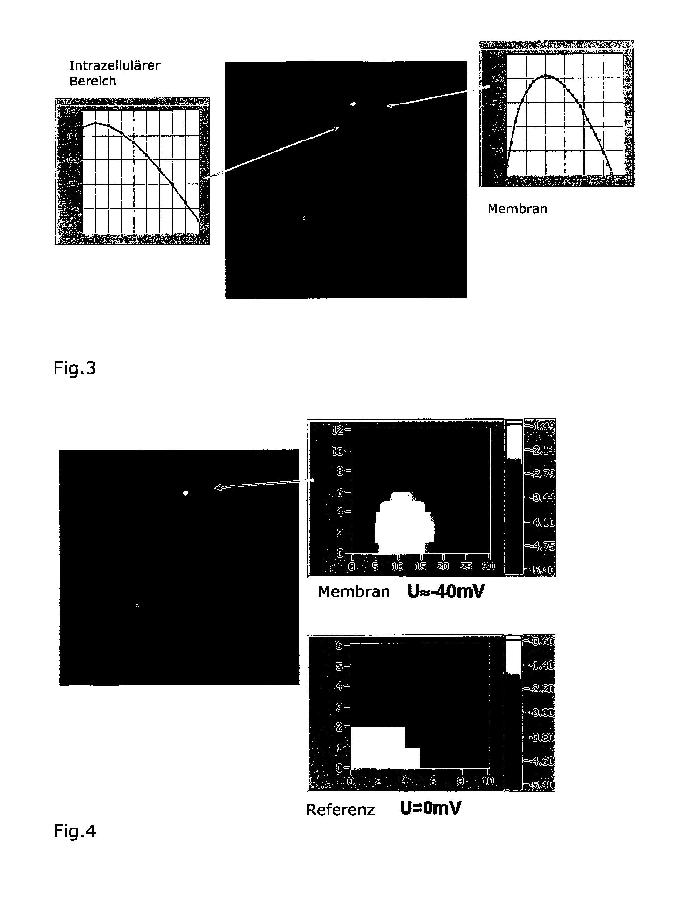

- Fig.3: zeigt ein Einkanal- Intensitätsbild generiert aus den positionsabhängigen zeitlich aufgelösten Signaldaten. An zwei Beispielpunkten (intrazellulär und in der Membran) werden die Einkanalhistogrammwerte (blaue Punkte) und die molekulare Interpretation mittels FIDA (rote Kurve) dargestellt.
- Fig.4: zeigt ein Intensitätsbild generiert aus den positionsabhängigen zeitlich aufgelösten Signaldatenströme zweier Detektoren. Zweikanal Histogramme von einer Referenzmessung ohne anliegenden Potential (U=0mV) und einer Messung in der Membran im Ruhezustand (U=40mV) werden als Falschfarbenbild entsprechend ihrer Häufigkeit dargestellt und mittels der molekularen Interpretationsmethode 2D FIDA ausgewertet.

Der Lumineszenzsensor ist vorteilhafterweise ein einzelnes Molekül, dass neben seiner Lumineszenzeigenschaft mit Eigenschaften ausgestattet sein kann, die den Sensor in Bereichen des Systems anreichert, deren Zustand für die erforderliche Erfassung des Zustands des Systems relevant sind. Beispielsweise kann der Lumineszenzsensor hydrophobe Eigenschaften aufweisen, damit dieser sich zum Beispiel in Zellmembranen anreichern kann, ohne seinerseits den Zustand des Systems signifikant zu verändern. Als mehr lipophile, membranliebende Lum i-neszenzsensoren kommen insbesondere folgende Stoffklassen in Frage, Cyanine, Hemicyanine. Besonders bewährt haben sich di-4-ANEPPS, di-8-ANEPBS, ANNINE 3, ANNINE 4, ANNINE 5, ANNINE 6. Ist es hingegen erwünscht Eigenschaften in anderen Bereichen des Systems zu erfassen, kann es vorteilhaft sein, stärker hydrophile Lumineszenzsensoren zu verwenden.

Erfasst werden kann grundsätzlich jede Eigenschaft des Systems, deren Änderung sich messbar auf die Polarisation und/oder Spektraleigenschaften des Lum i-neszenzsensors einwirkt. Erfindungsgemäß wird ausgenutzt, dass sich die Spektral- und/oder Polarisationseigenschaften des Lumineszenzsensors in Abhängigkeit von auf die Spektral- und/oder Polarisationseigenschaften des Lumineszenz-sensors einwirkenden Zuständen des Systems erfassbar ändern. Dabei sind die auf die Spektral- und/oder Polarisationseigenschaften des Lumineszenzsensors einwirkenden Zustände des Systems typischerweise ausgewählt aus der Gruppe bestehend aus pH-Wert, Membranpotential, Ionenkonzentration, Polarität der Umgebung, Temperatur, Druck und/oder Konformationsänderung.

Die durch das erfindungsgemäße Verfahren erfassten Eigenschaften werden erfindungsgemäß durch eine molekulare Fluktuationsanalyse ausgewertet. Typischerweise kommen dabei insbesondere Verfahren in Frage die eine Auswertung der erfassten Spektral- und/oder Polarisationseigenschaften des Lumineszenz-sensors mittels der molekularen Fluktuationsanalyse erlauben, wie Fluorescence Intensity Distribution Analysis (FIDA) [Kask 1999], Two Dimensional Fluorescence Intensity Distribution Analysis (2D FIDA) [Kask 2000], Fluorescence Intensity Multiple Distribution Analysis (FIMDA) [Palo 2000], Fluorescence Intensity and Lifetime Distribution Analysis (FILDA) [Palo 2002], Fluorescence Cross Correlation Spectroscopy (FCCS) [Schwille 1997], Fluorescence Correlation Spectroscopy (FCS) [Madge 1972], Mom entenanalyse [Qian 1990a, Qian 1990b], Photon Counting Histogram (PCH) [Chen 1999] und/oder Burst Integrated Fluorescence Lifetime (BIFL) [Eggeling 1998] .

Diese Art der Auswertung kann vorteilhafterweise eine Unterscheidung einer Helligkeitsänderung bedingt durch eine Änderung des Zustands des Systems unter Berücksichtigung der tatsächlichen Konzentration treffen. Das erfindungsgemäße Verfahren erlaubt mithin eine durch Änderung des Zustands des Systems bedingte Helligkeitsänderung des Lumineszenzsensors (Nutzsignal) von der Helligkeitsänderung aufgrund von unterschiedlichen Konzentrationen des Lumineszenzsensors (Rauschsignal) zu unterscheiden und trägt somit unter anderem zur Verbesserung der Empfindlichkeit und Erweiterung des Arbeitsbereiches der Erfassungsmethode bei. So kann auch bei nicht gut vorbereiteten Proben das Nutzsignal erhalten werden. Vorteile ergeben sich dabei insbesondere bei Screening-Methoden oder Untersuchung von Gewebeschnitten.

Weiterhin ist in einem differentiellen Modus über eine Koinzidenzanalyse aus verschiedenen Spektralbereichen, eine statistische molekulare spektrale Verschiebung ableitbar. Durch einen differentiellen Modus aus einer spektral oder polarisationsunterscheidenden Messung können Koinzidenzen ermittelt werden. Gleichartige Systemeigenschaften, z.B. die Konzentration des Lumineszenz-Sensors, können durch eine kombinierte, übergreifende Auswertung berücksichtigt werden und steigern hierdurch die Qualität des eigentlichen Sensorsignals. Speziell aus einer 2D-FIDA Messung ergeben sich aus demselben Meßdatenstrom so multiple I nform ationen, welche durch eine interne Referenzierung keine weitere Information aus demselben Meßpunkt benötigen sondern mit absoluten Spektralen- oder Polarisationseigenschaften aus Offline-Messungen verglichen werden können. Dies gewährleistet bei hoher Zuverlässigkeit der Dateninterpretation auch ein beschleunigtes Ausleseprozedere, da weder zwei Messungen durchgeführt werden müssen noch das System selber zwischen den Messungen verändert werden muß.

Im erfindungsgemäßen Verfahren wird als Lumineszenzsensor insbesondere ein spannungssensitiver Fluoreszenzsensor verwendet. Durch Messung der Spektraleigenschaften des spannungssensitiven Fluoreszenzsensors können Rückschlüsse auf das Membranpotential einer Zelle und/oder Rückschlüsse auf die aktiven oder passiven Ionentransportsysteme einer Zelle, vorzugsweise Ionenkanäle, lonenporen oder Ionenpumpen, gezogen werden.

Dabei kann die Messung der Spektraleigenschaften des spannungssensitiven Fluoreszenzsensors in Abhängigkeit von Stimuli erfolgen, insbesondere in Abhängigkeit von der Zugabe von Salzen, lonenkanalblockern, lonenkanalöffnern, Toxinen oder Antibiotika, um die entsprechenden Auswirkungen auf Geschehnisse in dem zu untersuchenden System zu beobachten und zu analysieren. Mit dem erfindungsgemäßen Verfahren lässt sich zum Beispiel die Vitalität von Zellen bestimmen.

Änderungen der lonenkonzentration eines zu untersuchenden Systems lassen sich mit dem erfindungsgemäßen Verfahren unter Einsatz eines ionenkonzentrationssensitiven Fluoreszenzsensor als Lumineszenzsensor ebenfalls erfassen. Durch Messung der Spektraleigenschaften des ionenkonzentrationssensitiven Fluoreszenzsensors wird es ermöglicht, Rückschlüsse auf die Ionenkonzentration in einer Zelle und/oder Rückschlüsse auf die aktiven oder passiven Ionentransportsysteme einer Zelle, vorzugsweise Ionenkanäle, Ionenporen oder Ionenpumpen, zu ziehen, insbesondere wenn die Messung im Zusammenhang mit einem an das zu untersuchende System gegebenen Stimulus erfolgt. Zum Beispiel ist es möglich, eine Änderung der Spektraleigenschaften des ionenkonzentrationssensitiven Fluoreszenzsensors in Abhängigkeit von Stimuli zu erfassen, die eine Änderung einer zellulären Ionenkonzentration als Maß für eine second-messenger Aktivität induzieren. Aufgrund der Bedeutung der Calciumionen für den Stoffwechsel und Signalverarbeitung von biologischen Systemen wie der Zelle ist ein Fluoreszenzsensor vorteilhaft, der sensitiv für die Konzentration von Calcium-Ionen ist.

Weitere Anwendungsgebiete des erfindungsgemäßen Verfahrens sind das Screening nach pharmazeutischen Wirkstoffen, Diagnostik sowie Bestimmung von Viren oder Virenfragmenten vorzugsweise in zellulären Systemen.

Das erfindungsgemäße Verfahren eignet sich insbesondere zur Erfassung von Zuständen in einer fluidischen Matrix. Der Terminus fluidische Matrix bedeutet insbesondere eine Flüssigkristall-Matrix, ein biologisches System wie Zellen, Zellorganellen, künstliche und natürliche Membranen, Vesikel etc. Die fluidische Matrix kann aus einzelnen mobilen Bausteinen (z.B. Lipiden) aufgebaut sein und bildet ein zweidimensionales System welches eine Fluktuation innerhalb der Matrix oder durch die Matrix (z.B. durch lonenkanäle oder Poren) erlaubt.

Wie erwähnt eignet sich das erfindungsgemäße Verfahren insbesondere zur Messung von Membranpotentialen, second-messenger Aktivitäten, Vitalitätstest von Zellen, Antibiotikanachweis, Transportphänomenen innerhalb der Zelle sowie über und in der fluidischen Matrix.

Das erfindungsgemäße Verfahren eignet sich insbesondere zum Einsatz in Screeningverfahren, bei denen keine Referenzierung an der exakt gleichen Position möglich ist sowie bei Untersuchungen an Zellsystemen und Gewebeschnitten, bei denen eine Änderung der Zellpotentiale mittels Patchclamp oder verwandter Methoden nur einzelne Teilsysteme zugänglich macht und nicht gleichzeitig verschiedene Messungen erlaubt. Insbesondere in diesen Systemen kann durch die Fluktuationsauswertung eine Trennung von autofluoreszenten Anteilen erfolgen und so eine Charakterisierung auch bei unterschiedlichen Umgebungen durchgeführt werden.

Die Erfassung der Daten kann mittels einer in Figur 1 schematisch dargestellten Vorrichtung erfolgen.

Die vorliegende Erfindung wird im folgenden am Beispiel einer Fluktuationsanalyse unter Verwendung der FIDA und 2D-FIDA mit einem membranliebenden, spannungssensitiven Farbstoff erläutert. Durch den Einsatz von Fluoreszenz-Fluktuations-Methoden können lokale Farbstoffkonzentrationen ermittelt werden und so Intensitätsänderungen aufgrund von spektralen Verschiebungen des einzelnen Farbstoffmolekülspektrums von den Intensitätsänderungen des Gesamtsystem aufgrund von Farbstoffanzahl - Membranbeladung - und Autofluoreszenz unterschieden werden.

Die Erfindung wird anhand der folgenden Beispiele näher erläutert.

Probenvorbereitung: Als Probe dient eine CHO-Zelllinie (Chinese Hamster Ovary) welche den Kalium Ionenkanal hERG exprimiert (Genion, Hamburg). Diese Zellen werden in einer 96 Well Greiner MTP Micro Titre Plate mit Glasboden mit einer Zellzahl von 20000/1 00µl/Well ausgesät.

Anfärbung: Der amphiphile hemicyanine Farbstoff ANNINE-6 (Abteilung Fromherz, MPI für Biochemie Martinsried) wird in einer 20% Pluronic F127 DMSO (P-3000, Molecular Probes, Eugene Oregon) mit einer Konzentration von 0.5mg/ml in einem Ultraschallbecken (15min Beschallung) gelöst. Die Farbstofflösung wird in einem Mischungsverhältnis von 1:100 mit Ringer verdünnt und für 5min zu den Zellen geben, danach werden die Zellen mit purem Ringer gewaschen. Der verwendete Membran-Farbstoff verändert aufgrund des Stark-Effekts sein Anregungs- und Emissionsspektrum in Abhängigkeit von der über die Membran anliegenden elektrischen Potential (Voltage Sensitive Dye) und dient so als lokaler Sensor [Kuhn 2004].

Meßaufbau: Für die Messung wir ein modifiziertes konfokalen Fluoreszenz-Fluktuations-Spektrometer (Insight, Evotec Technologies GmbH) mit einer modularen Laser-Scanning-Einheit (EVOtool™-Single Cell Single Molecule, Evotec Technologies GmbH) (Figur 1) verwendet. Der primäre dichroitische Spiegel trennt hierbei die Anregungswellenlänge des Argon Ionen Laser 488nm von den längerwelligen Fluoreszenzsignalen. Den beiden Detektionskanälen sind hinter dem konfokal angebrachten 50µm Pinhole unterschiedliche Filter zugeordnet (Kanal 1 mit 590/60nm Bandpass "grün", Kanal 2 mit 670/40nm Bandpass "rot") (Figur 2). Der Fokus wird innerhalb der fluoreszenten Probe definiert bewegt und die ortsabhängigen Fluoreszenz-Signale der zwei Single Photon Counting Detektoren zeitaufgelöst mit einer Auflösung von 2µs gespeichert.

Auswertung: Mit Hilfe der Analysesoftware (Acapella™, Evotec Technologies GmbH) werden einzelne orts- und zeitaufgelösten Datenspuren interpretiert, so daß man ein Signal-Intensitätsbild - über die Integration gleicher Ortskoordinaten und Aufbereitung in X,Y und Z Koordinaten bei zwei Signalkanälen - und eine bildpunktentsprechende zeitliche Signalspur mit einer Auflösung in 2µs-Schritten erhält. Für die gewählte Auswertemethode FIDA und FIDA2D werden diese lokalen Fluktuationsdaten in 40µs Zeitschritte zusammengefaßt und Histogramme für jeden der zwei Detektionskanäle einzeln und ein 2D Histogramm für beide Kanäle erstellt (Figur 3, Figur 4). Die gewonnen Histogramme werden mit Hilfe der Analysesoftware Acapella™ ausgewertet und die molekulare Helligkeit sowie die Konzentration entsprechend der FIDA/FIDA2D Theorie für eine Komponente bestimmt. Das Verhältnis der molekularen Helligkeiten des grünen und roten Spektralbereiches ergibt so ein konzentrationsunabhängiges Maß für die Lage des Fluoreszenzspektrums des verwendeten Farbstoffs. Eine Verschiebung sowie eine Größenänderung des Anregungs- und Emmissionsspektrums kann über diese Berechnung ermittelt werden und über einmalig durchgeführte Charakterisierungsexperimente das Membranpotential an jedem Ort bestimmt werden.

Ergebnis: Für die in Figur 4 dargestellten 2D Histogramme ergibt sich aus den über FIDA2D ermittelten molekularen Helligkeiten ein Verhältnis von 1.21 bezüglich einer Referenzmessung außerhalb der Zellmembran. Der entsprechende Literaturwert aus der spektralen Charakterisierung mittels Patchclamp Technik ohne Fluktuationsanalyse ergibt mit 10% Fluoreszenzänderung bei 40mV Spannungsänderung [Kuhn 2003] ein Verhältnis von (1.0+0.1)/(1.0-0.1)≈1 .22. Die gewählte Auswertemethode gestattet so mit sehr guter Qualität eine direkte lokale Potentialbestimmung.

### Referenzliste

High Sensitivity of Stark-Shift Voltage-Sensing Dyes by One- or Two-Photon Excitation near the red Spectral Edge; Bernd Kuhn, Peter Fromherz and Winfried Denk ; Biophysical Journal 87 (2004) 631 -639

Anellated Hemicyanine Dyes in Neuron Membrane: Molecular Stark Effect and Optical Voftage Recording; Bernd Kuhn and Peter From herz ; Journal of Physical Chemistry B 107 (2003) 7903-7913

Anellated Hemicyanine Dyes with Large Symmetrical Solvatochromism of Absorption and Fluorescence; Gerd Hübener, Armin Lambacher and Peter Fromherz Journal of Physical Chemistry B 107 (2003) 7896-7902

Cable Properties of Dendrites in Hippocampal Neurons of the Rat Mapped by a Voltage-Sensitive Dye; Elisabeth Meyer, Carsten O. Müller and Peter Fromherz; European Journal of Neuroscience 9 (1997) 778-785

Time Resolved Fluorescence of a Hemicyanine Dye - Dynamics of Rotamerism and Resolvation Carlheinz Röcker, Andrea Heilemann, Peter Fromherz, *Journal of Physical Chemistry 100 (1996) 12172-12177*

Thermodynamic fluctuations in a reacting system - measurement by fluorescence correlation spectroscopy; Magde, D., Elson, E. L., & Webb, W. W. (1972). *Phys. Rev. Lett.* 2 9 , 704-708 .

Dual-color fluorescence cross-correlation spectroscopy for multicomponent diffusional analysis in solution; Schwille, P., F. J. Meyer-Almes, and R. Rigler. 1997.. *Biophys.* J. 72:1878-1886

Distribution of molecular aggregation by analysis of fluctuation moments; Qian, H. & Elson, E. L. (1990a). *Proc. Natl. Acad. Sci. USA87,* 5479-5483

On the analysis of high order moments of fluorescence fluctuations; Qian, H. & Elson, E. L. (1990b). *Biophys.* J. 57, 375-380 .

The photon counting histogram in fluorescence fluctuation spectroscopy; Chen, Y., J. D. Müller, P. T. So, and E. Gratton. 1999. *Biophys.* J. 77:553-567

Fluorescence-intensity distribution analysis and its application in biomolecular detection technology. Kask, P., K. Palo, D. Ullmann, and K. Gall. 1999. *Proc. Natl. Acad. Sci. USA.* 96:13756-13761

Two-dimensional fluorescence intensity distribution analysis: theory and applications; Kask, P., K. Palo, N. Fay, L. Brand, Ü. Mets, D. Ullmann, J. Jungmann, J. Pschorr, and K. Gall. 2000. *Biophys.* J. 78:1703-1713

Fluorescence Intensity and Lifetime Distribution Analysis: Toward Higher Accuracy in Fluorescence Fluctuation Spectroscopy; Kaupo Palo, Leif Brand,Christian Eggeling,Stefan Jäger, Peet Kask,' and Karsten Gall; Biophys J, August 2002, p. 605-618, Vol. 83, No. 2

Monitoring conformational dynamics of a single molecule by selective fluorescence spectroscopy; Eggeling, C., Fries, J. R., Brand, L., Günther, R., & Seidel, C. A. (1998). *Proc. Natl. Acad. Sci. USA* 95 , 1556-1561 .

Evotec Biosystems AG (1998). WO 98/16814 .

## Patentansprüche

1. Verfahren zur Erfassung des Zustandes eines vorzugsweise biologischen Systems, vorzugsweise in Abhängigkeit von einem Stimulus, wobei das System insbesondere ausgewählt ist aus der Gruppe bestehend aus Zellen, Zellorganellen, künstlichen Membranen, natürlichen Membranen und Vesikeln, mit einem in dem System befindlichen Lumineszenzsensor, dessen Spektral- und/oder Polarisationseigenschaften vom Zustand des Systems abhängig sind, wobei die Spektral- und/oder Polarisationseigenschaften des Lumineszenzsensors erfasst werden, mittels einer molekularen Fluktuationsanalyse ausgewertet und hierüber Rückschlüsse auf den Zustand des Systems gezogen werden.

2. Verfahren nach Anspruch 1, wobei sich die Spektral- und/oder Polarisationseigenschaften des Lumineszenzsensors in Abhängigkeit von auf die Spektral- und/oder Polarisationseigenschaften des Lumineszenzsensors einwirkenden Zuständen des Systems erfassbar ändern.

3. Verfahren nach Anspruch 1 oder 2, wobei die auf die Spektral- und/oder Polarisationseigenschaften des Lumineszenzsensors einwirkenden Zustände des Systems ausgewählt sind aus der Gruppe bestehend aus Ionenkonzentration, pH-Wert, Membranpotential, Temperatur, Druck, Konformationsänderung und Polarität der Umgebung.

4. Verfahren nach einem der Ansprüche 1 bis 3, wobei die erfassbaren Spektral- und/oder Polarisationseigenschaften des Lumineszenzsensors mittels Fluorescent Intensity Distribution Analysis (FIDA), two-dimensional Fluorescence Intensity Distribution Analysis (2D-FIDA), Fluorescence Intensity Multiple Distribution Analysis (FIMDA), Fluorescence Intensity and Lifetime Distribution Analysis (FILDA), Fluorescence Cross Correlation Spectroscopy (FCCS), Fluorescence Correlation Spectroscopy (FCS), Momentenanalyse, Photon Counting Histogram (PCH) und/oder Burst Integrated Fluorescence Lifetime (BIFL) ausgewertet werden.

5. Verfahren nach einem der Ansprüche 1 bis 4, wobei der Lumineszenzsensor ein spannungssensitiver Ruoreszenzsensor ist.

6. Verfahren nach Anspruch 5, wobei durch Messung der Spektraleigenschaften eines spannungssensitiven Fluoreszenzsensors Rückschlüsse auf das Mem b-ranpotential einer Zelle und/oder Rückschlüsse auf die aktiven oder passiven Ionentransportsysteme einer Zelle, vorzugsweise Ionenkanäle, Ionenporen oder Ionenpumpen, gezogen werden.

7. Verfahren nach Anspruch 6, wobei die Messung der Spektraleigenschaften des spannungssensitiven Fluoreszenzsensors in Abhängigkeit von Stimuli erfolgt, insbesondere in Abhängigkeit von der Zugabe von Salzen, lonenkanalblockern, lonenkanalöffnern, Toxinen oder Antibiotika.

8. Verfahren nach einem der Ansprüche 6 oder 7 zur Ermittlung der Zellvitalität.

9. Verfahren nach einem der Ansprüche 1 bis 4, wobei der Lumineszenzsensor ein ionenkonzentrationssensitiver Fluoreszenzsensor ist.

10. Verfahren nach Anspruch 9, wonach durch Messung der Spektraleigenschaften des ionenkonzentrationssensitiven Fluoreszenzsensors Rückschlüsse auf die lonenkonzentration in einer Zelle und/oder Rückschlüsse auf die aktiven oder passiven lonentransportsysteme einer Zelle, vorzugsweise lonenkanäle, lonenporen oder lonenpumpen, gezogen werden.

11. Verfahren nach Anspruch 10, wobei die Messung der Spektraleigenschaften des ionenkonzentrationssensitiven Fluoreszenzsensors in Abhängigkeit von Stimuli erfolgt, die eine Änderung einer zellulären Ionenkonzentration als second-messenger Aktivität induzieren.

12. Verfahren nach einem der Ansprüche 9 bis 11, wobei der Fluoreszenzsensor sensitiv für die Konzentration von Calcium-lonen ist.

13. Verfahren nach einem der vorhergehenden Ansprüche zur Anwendung in Screeningverfahren nach pharmazeutischen Wirkstoffen, in der Diagnostik sowie zur Bestimmung von Viren oder Virenfragmenten vorzugsweise in zellulären Systemen.

14. Verfahren nach einem der vorhergehenden Ansprüche, wobei das System eine fluidische Matrix ist, insbesondere eine zelluläre Membran oder ein Flüssigkristall ist.
